# EUROPÄISCHE PATENTSCHRIFT

(11) **EP 2 092 231 B1**
(45) Veröffentlichungstag und Bekanntmachung des Hinweises auf die Patenterteilung: **23.11.2016**
(21) Anmeldenummer: 07819099.8
(22) Anmeldetag: 18.10.2007
(51) Int. Cl.: F16L 47/02, B29C 65/20, B29C 57/00, E06B 3/96

(54) **KUNSTSTOFF-VERBUNDBAUTEIL MIT ZWEI MITEINANDER VERSCHWEISSTEN KUNSTSTOFFKÖRPERN, WERKZEUG ZUR HERSTELLUNG EINER SCHWEISSVERBINDUNG ZWISCHEN DEN BEIDEN KUNSTSTOFFKÖRPERN SOWIE VERFAHREN ZUR HERSTELLUNG DER SCHWEISSVERBINDUNG**
PLASTIC COMPOSITE COMPONENT COMPRISING TWO PLASTIC BODIES WELDED TOGETHER, TOOL FOR PRODUCING A WELD CONNECTION BETWEEN THE TWO PLASTIC BODIES AND METHOD FOR PRODUCING SAID WELD CONNECTION
ÉLÉMENT COMPOSITE EN PLASTIQUE À DEUX CORPS EN PLASTIQUE SOUDÉS L'UN À L'AUTRE, OUTIL POUR ASSEMBLER PAR SOUDURE CES DEUX CORPS EN PLASTIQUE ET PROCÉDÉ D'ASSEMBLAGE PAR SOUDURE CORRESPONDANT

(30) Priorität: 21.10.2006 DE 102006049780
(43) Veröffentlichungstag der Anmeldung: 26.08.2009
(73) Patentinhaber: REHAU AG + Co, 95111 Rehau (DE)
(72) Erfinder: ECKERT, Stefan, 91301 Forchheim (DE); MELZER, Klaus, 91099 Poxdorf (DE); FISCHER, Markus, 90763 Fürth (DE); TIPPENHAUER, Horst, 91080 Marloffstein (DE)
(86) Internationale Anmeldenummer: PCT/EP2007/009032
(87) Internationale Veröffentlichungsnummer: WO 2008/046611

(56) Entgegenhaltungen:
- EP-A- 1 130 303
- JP-A- 11 221 858

## Beschreibung

Die Erfindung betrifft ein Kunststoff-Verbundbauteil nach dem Oberbegriff des Anspruchs 1. Ferner betrifft die Erfindung ein Werkzeug zur Herstellung einer Schweißverbindung zwischen Kunststoffkörpern des Kunststoff-Verbundbauteils sowie ein Verfahren zur Herstellung der Schweißverbindung.

Ein Kunststoff-Verbundbauteil der eingangs genannten Art ist durch offenkundige Vorbenutzung bekannt. Die mit den bekannten Herstellungsverfahren hergestellten Schweißverbindungen zwischen den Kunststoffkörpern des Kunststoff-Verbundbauteils sind, insbesondere um hohen Ansprüchen zu genügen, noch verbesserungsbedürftig. Darüber hinaus beschreibt die EP 1 130 303 A1 das Verschweißen zweier Kunststoffverbundrohre mit einer rohrförmigen Innenschicht aus synthetischem Harz und einer um diese gewickelten Verstärkungsschicht aus einer gereckten Polyolefin-Harzschicht, wobei jeweils die inneren Kunststoffkomponenten miteinander verschweißt und die äußere Kunststoffkomponente von der Schweißnaht beabstandet sind. Ein Verfahren zur Herstellung eines Kraftstofftanks mit einer gasundurchlässigen Auskleidungsschicht, die als Einleger in eine Spritzgussform vor dem Spritzgießen einer Tankhälfte eingebracht wird, wobei beim Verschweißen der beiden Tankhälften die beiden Tankhälften stirnseitig an einem Schweißspiegel über einen abschließenden Randbereich der Auskleidung anliegen, so dass eine geschlossene Schicht der gasundurchlässigen Auskleidung im Inneren des Tanks entsteht, ist aus der JP 11 221858 A bekannt.

Es ist daher eine Aufgabe der vorliegenden Erfindung, ein Kunststoff-Verbundbauteil der eingangs genannten Art derart weiterzubilden, dass die Qualität der Schweißverbindung verbessert ist.

Erfindungsgemäß wurde erkannt, dass im Bereich von Schweißverbindungen mehrere Kunststoffkomponenten mit unterschiedlichen Funktionen vorliegen können. Insbesondere wurde erkannt, dass eine dieser mehreren Kunststoffkomponenten für die Verminderung der Qualität der Schweißverbindung verantwortlich ist. Dadurch, dass diese, die Qualität der Schweißverbindung ansonsten mindernde Kunststoffkomponente von der Schweißnaht weg verdrängt ist, kann sie die Ausbildung der Schweißverbindung nicht mehr unerwünscht beeinflussen. Es resultiert insgesamt eine Schweißverbindung mit verbesserter Qualität. Die beiden Kunststoffkomponenten müssen nicht aus unterschiedlichen Materialien bestehen. Es reicht aus, wenn sie sich in ihrer Funktion unterscheiden. Dies ist z. B. dann der Fall, wenn eine der beiden Kunststoffkomponenten einer weiteren Funktionskomponente des Kunststoff-Verbundbauteils, z. B. einer Dichtung, benachbart ist und die andere der beiden Kunststoffkomponenten nicht.

Das erfindungsgemäße Verdrängen der zweiten, inneren Kunststoffkomponente stellt einen grundsätzlich anderen Prozess dar als ein Materialabtrag der zweiten Kunststoffkomponente. Das Material der zweiten, inneren Kunststoffkomponente wird beim Verdrängen nicht entfernt, sondern der Abstand zwischen der zweiten, inneren Kunststoffkomponente und der Schweißnaht wird durch Verlagerung des Materials der zweiten, inneren Kunststoffkomponente erzeugt. Erfindungsgemäß kommt das erfindungsgemäße Verdrängungskonzept bei Fenster- oder Tür-Hohlkammerprofilabschnitte als Kunststoffkörper besonders vorteilhaft zum Tragen, da dort in vielen Fällen Kunststoffkörper mit mehreren Kunststoffkomponenten vorliegen, die miteinander verschweißt werden müssen. Ein Beispiel hierfür ist die eckseitige Verschweißung von Hohlkammerprofilabschnitten zur Bildung eines Türoder Fensterrahmens.

Bei Kunststoffkomponenten aus unterschiedlichen Materialien nach Anspruch 2 kommt das erfindungsgemäße Verdrängungskonzept besonders dann zum Tragen, wenn die zweite, innere Kunststoffkomponente aus einem weniger gut verschweißbaren Material besteht als die erste, äußere Kunststoffkomponente. In diesem Fall wird durch die Verdrängung verhindert, dass das weniger gut verschweißbare Material der zweiten Kunststoffkomponente unerwünscht in den Schweißbereich eindringt und die Qualität der Verschweißung verringert.

Eine zweite Kunststoffkomponente nach Anspruch 3 kann besonders an bestimmte Anforderungen an das Kunststoff-Verbundbauteil angepasst werden, wobei aufgrund des erfindungsgemäßen Verdrängungskonzeptes nun nicht mehr auf die Schweißbarkeit der zweiten Kunststoffkomponente geachtet zu werden braucht. Bei der zweiten Kunststoffkomponente kann es sich insbesondere um eine gefüllte, insbesondere faserverstärkte Kunststoffmatrix handeln. Beim Fasermaterial kann es sich um Glasfasern, Kunst- oder Naturfasern handeln. Alternativ kann es sich bei der zweiten Kunststoffkomponente auch um einen Schaum, um ein gefülltes Armierungs- oder um ein Recycling-Material handeln.

Ein Verbundlagenaufbau nach Anspruch 4 ermöglicht ein hinsichtlich seiner Funktion besonders flexibles Kunststoff-Verbundbauteil. In diesem Fall ist die zweite Kunststoffkomponente gegenüber den beiden anderen Kunststoff-Verbundlagen zurückgedrängt.

Eine weitere Aufgabe der Erfindung ist es, ein Werkzeug zur Herstellung einer Schweißverbindung zwischen zwei Kunststoffkörpern zur Herstellung des erfindungsgemäßen Kunststoff-Verbundbauteils zu schaffen.

Diese Aufgabe ist erfindungsgemäß gelöst durch ein Werkzeug mit den im Anspruch 5 angegebenen Merkmalen. Dabei führt ein Verdrängungskörper, der insbesondere auf eine bestimmte Vorgabe-Temperatur geheizt ist, zu einer reproduzierbaren und auch mit Massenproduktionstechniken einsetzbaren Verdrängung der zweiten Kunststoffkomponente. Ein Schweißspiegel hat sich zur Herstellung der Schweißverbindung bewährt. Der Schweißspiegel und der Verdrängungskörper können als separate Komponenten oder als in ein Bauteil integrierte Komponenten vorliegen. Dabei ist eine integrale Werkzeuganordnung besonders kompakt und führt zu einem Schweißverfahren mit vorteilhaft wenigen Verfahrensschritten.

Formen des Verdrängungskörpers nach den Ansprüchen 6 bis 9 haben sich je nach dem Materialparametern der ersten Kunststoffkomponente und der zweiten Kunststoffkomponente als vorteilhaft herausgestellt. Dabei wird jeweils die Form des Verdrängungskörpers eingesetzt, die eine möglichst rückstandsfreie Verdrängung der zweiten Kunststoffkomponente gewährleistet, ohne dabei die erste Kunststoffkomponente unerwünscht mitzunehmen. Zudem wird die Form des Verdrängungskörpers und/oder des Schweißspiegels bevorzugt so gewählt, dass eine Wulstbildung auf der Sichtseite des Schweißbereichs weitgehend vermieden werden kann. Dies kann beispielsweise durch einen zusätzlichen Anlagekörper geschehen, der von außen im Schweißbereich an den beiden Kunststoffkörpern anliegt, so dass Material im Schweißbereich nicht nach außen entweichen kann. Alternativ ist es möglich, eine auf der Sichtseite entstehende Wulst mechanisch abzutragen oder diese, sofern dies tolerabel ist, einfach stehen zu lassen.

Eine Werkzeuggestaltung nach Anspruch 10 mit einem Verdrängungskörper, der anders temperiert ist als der Schweißspiegel, kann gut an verschiedene Materialkombinationen der Kunststoffkomponenten angepasst werden. Für den Verdrängungskörper kann die Temperatur gewählt werden, bei der eine besonders effiziente Verdrängung resultiert. Der Schweißspiegel wiederum wird auf eine Temperatur eingestellt, bei der die erste Kunststoffkomponente in einen optimalen Schweißzustand versetzt wird.

Eine weitere Aufgabe der Erfindung ist es, ein Verfahren zur Herstellung eines erfindungsgemäßen Kunststoff-Verbundbauteils anzugeben.

Diese Aufgabe ist erfindungsgemäß gelöst durch ein Verfahren mit den im Anspruch 11 angegeben Schritten. Das Verdrängen und das Verschweißen können in einem einstufigen Verfahren erfolgen, also insbesondere durch Einsatz eines kombinierten Verdrängungsund Verschweißwerkzeugs, z. B. durch einen Schweißspiegel mit Verdrängungsabschnitten. Alternativ ist es möglich, das Verfahren zweistufig durchzuführen, wobei in einem ersten Schritt vor dem nachfolgenden Verschweißen ein separates Verdrängen erfolgt. Dies kann durch ein vom Schweißspiegel separates Verdrängungswerkzeug erfolgen.

Die Vorteile des Verfahrens entsprechen denjenigen, die vorstehend schon unter Bezugnahme auf das erfindungsgemäße Kunststoff-Verbundbauteil und das erfindungsgemäße Werkzeug diskutiert wurden.

Die Erfindung wird nachfolgend anhand der Zeichnung näher erläutert. In dieser zeigen:
- Fig. 1: ein verschweißtes Kunststoff-Verbundbauteil (nicht erfindungsgemäß);
- Fig. 2: schematisch ein Werkzeug zur Herstellung einer Schweißverbindung zwischen zwei Kunststoffkörpern des Kunststoff-Verbundbauteils nach Fig. 1 mit einem Verdrängungskörper;
- Fig. 3: eine Ausschnittsvergrößerung aus Fig. 2;
- Fig. 4 bis 6: zu Fig. 3 ähnliche Darstellungen weiterer randseitiger Gestaltungsvarianten eines Verdrängungsabschnitts des Verdrängungskörpers;
- Fig. 7 bis 9: Momentaufnahmen von Zwischenschritten bei der Herstellung des Kunststoff-Verbundbauteils nach Fig. 1 mit dem Werkzeug nach Fig. 2 und einem zusätzlichen Schweiß- bzw. Heizspiegel;
- Fig. 10: ein Beispiel eines erfindungsgemäß verschweißbaren Kunststoffkörpers in Form eines Fenster- oder Tür-Hohlkammerprofilabschnitts;
- Fig. 11: ein weiteres Beispiel eines verschweißbaren Kunststoffkörpers in Form eines Rohrabschnitts (nicht erfindungsgemäß);
- Fig. 12: einen Ausschnitt aus einem Fenster- oder Tür-Hohlkammerprofilabschnitts mit Verdrängungsbereichen im Bereich einer Dichtaufnahme;
- Fig. 13: perspektivisch vergrößert einen Ausschnitt aus Fig. 12;
- Fig. 14: einen verschweißbaren Dreischicht-Kunststoffkörper; und
- Fig. 15: einen Ausschnitt eines Werkzeugs zur Herstellung eines KunststoffVerbundbauteils aus zwei Kunststoffkörpern nach Fig. 14 unter Herstellung einer Schweißverbindung.

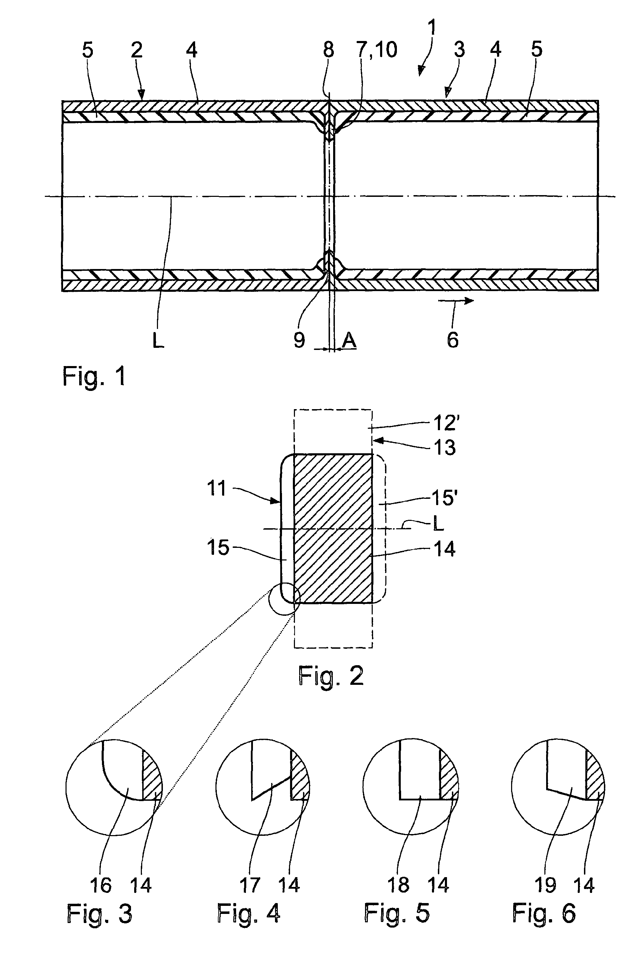

Ein in der Fig. 1 im Bereich einer Schweißverbindung dargestelltes Kunststoff-Verbundbauteil 1 hat zwei miteinander verschweißte Kunststoffkörper 2, 3. Bei den Kunststoffkörpern 2, 3 kann es sich beispielsweise um Rohr- oder um sonstige Profilabschnitte handeln. Jeder der beiden Kunststoffkörper 2, 3 ist aus einem Kunststoff-Verbundmaterial mit einer ersten, in der Fig. 1 äußeren Kunststoffkomponente 4 und einer zweiten, in der Fig. 1 inneren Kunststoffkomponente 5 gefertigt. Die Kunststoffkörper 2, 3 sind längs einer Extrusionsrichtung 6 extrudiert, wobei die Kunststoffkomponenten 4, 5 miteinander koextrudiert werden.

Die erste Kunststoffkomponente 4 ist aus einem gut schweißbaren Kunststoffmaterial, z. B. aus schweißbarem PVC. Auch ein anderes schweißbares thermoplastisches Elastomer (TPE) ist möglich. Die zweite Kunststoffkomponente 5 ist aus einem weniger gut schweißbaren Material, z. B. aus einem Kunststoff mit zusätzlichen Füllstoffen. Derartige Füllstoffe können Fasern zur Verstärkung der zweiten Kunststoffkomponente 5 sein, z. B. Glasfasern oder auch Holz- oder Naturfasern. Als Kunststoffmatrix kann Polyurethan oder PVC oder auch ein anderes Kunststoffmaterial eingesetzt sein. Bei der zweiten Kunststoffkomponente 5 kann es sich auch um ein geschäumtes Material aus einem Duroplasten, z. B. aus Polyurethan oder Polystyrol, handeln, welches z. B. für Dämmungs- oder Armierungszwecke eingesetzt wird. Bei der zweiten Kunststoffkomponente 5 kann es sich auch um ein Recyclingmaterial handeln.

Im Verbindungsbereich sind die Kunststoffkörper 2, 3 über eine umlaufende Schweißnaht 7 miteinander verbunden, die in einer Schweißnaht-Ebene 8 liegt. Benachbart zur Schweißnaht 7 zwischen den beiden Kunststoffkörpern 2, 3 ist die zweite Kunststoffkomponente 5 von der Schweißnaht 7 um einen Abstand A weg verdrängt. Eine der Schweißnaht 7 zugewandte Grenzfläche 9 der zweiten Kunststoffkomponente 5 ist also von der Schweißnaht-Ebene 8 beabstandet.

Die Schweißverbindung zwischen den Kunststoffkörpern 2, 3 findet also ausschließlich über die erste Kunststoffkomponente 4 statt. Im Bereich der Schweißnaht 7 ist die erste Kunststoffkomponente 4 bedingt durch den Schweißvorgang nach innen gedrückt, so dass die Schweißnaht 7 eine nach innen ragenden Wulst 10 aufweist, die die Grenzflächen 9 der zweiten Kunststoffkomponente 5 überdeckt und in den Freiraum, der durch die um den Abstand A verdrängte Grenzfläche 9 gebildet ist, eindringt. Aufgrund der großen Verbindungsfläche der miteinander verschweißten ersten Kunststoffkomponenten 4 im Bereich der Schweißnaht-Ebene 8 ergibt sich somit ein sicherer, dauerhafter und dichter Schweißverbund der beiden Kunststoffkörper 2, 3.

Im Ausführungsbeispiel nach Fig. 1 mit Kunststoffkörpern 2, 3 in Form von Rohrabschnitten ist die Schweißnaht 7 ringförmig und rotationssymmetrisch um eine Längsachse L der Kunststoffkörper 2, 3.

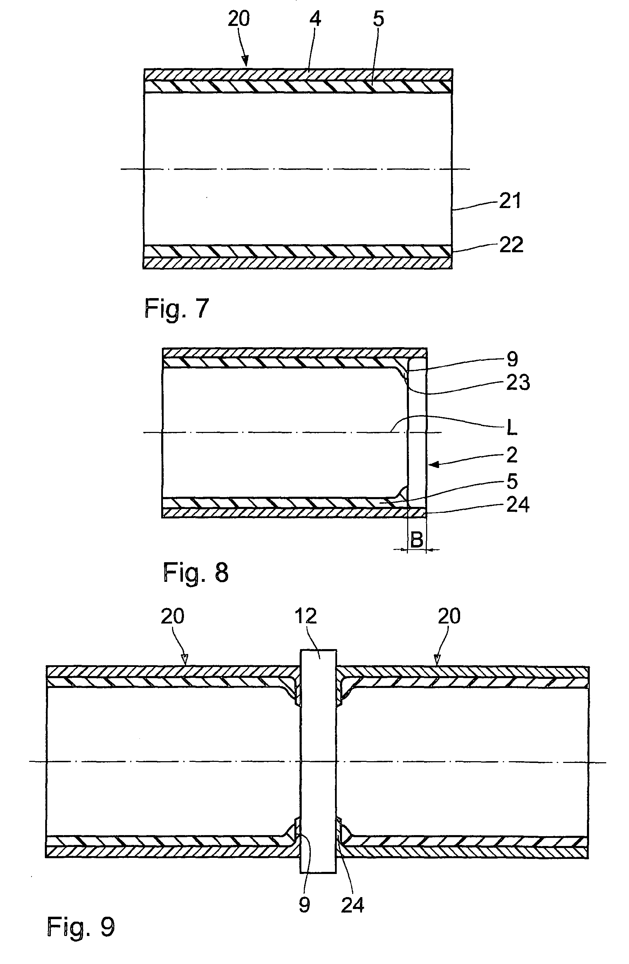

Fig. 2 zeigt ein Verdrängungs-Bauteil 11 als Bestandteil eines Werkzeugs zur Herstellung einer Schweißverbindung zwischen den Kunststoffkörpern 2, 3. Durchgezogen dargestellt ist in der Fig. 2 eine Variante des Werkzeugs, bei der dieses zweiteilig ist und neben dem Verdrängungs-Bauteil 11 noch einen in der Fig. 9 dargestellten Schweiß- bzw. Heizspiegel 12 aufweist. Alternativ ist es möglich, ein einteiliges Werkzeug 13 vorzusehen, bei dem der Schweiß- bzw. Heizspiegel 12' als integraler Bestandteil eines Grundkörpers 14 ausgeformt ist.

Stirnseitig hat der Grundkörper 14 mindestens einen Verdrängungskörper 15 zum Verdrängen der zweiten Kunststoffkomponente 5 aus der Schweißnaht-Ebene 8, wie nachfolgend noch erläutert wird.

Bei der Variante der einteiligen Gestaltung des Werkzeugs 13 kann der Grundkörper 14 auch zwei einander gegenüberliegende Verdrängungskörper 15, 15' aufweisen, die dann mit dem Schweißspiegel 12' verbundene Überstandskörper darstellen.

Der Verdrängungskörper 15 ist beheizbar. Dies kann dadurch erfolgen, dass der Grundkörper 14, z. B. über eine Widerstandsheizung, erwärmt wird und diese Wärme durch Wärmeleitung an den Verdrängungskörper 15 weitergibt. Durch eine nicht dargestellte Temperaturregelung kann die Temperatur des Verdrängungskörpers 15 auf einen ersten Temperatur-Vorgabewert gehalten werden.

In einer Arbeitsposition fluchtet eine Längsachse L des Verdrängungs-Bauteils 11 mit der Längsachse L eines der beiden Kunststoffkörper, z. B. des Kunststoffkörpers 2. Eine senkrecht zur Längsachse L umlaufende äußere Kontur des Verdrängungskörpers 15 entspricht der umlaufenden Profilkontur der zweiten Kunststoffkomponente 5. Beim Beispiel der rohrförmigen Kunststoffkörper 2, 3 hat der Verdrängungskörper 15 einen Außendurchmesser, der dem Außendurchmesser der zweiten Kunststoffkomponente 5 entspricht und minimal kleiner ist als der Innendurchmesser der ersten Kunststoffkomponente 4.

Benachbart zur äußeren Kontur, also randseitig, hat der Verdrängungskörper 15 einen umlaufenden, ballig ausgeführten Verdrängungsabschnitt 16. Letzterer ist in der Fig. 3 in einer Ausschnittsvergrößerung dargestellt. Der Verdrängungsabschnitt 16 geht beim mehrteiligen Werkzeug 11, 12 stufenlos in den Grundkörper 14 über.

Alternative Profilierungen anstelle des balligen Verdrängungsabschnitts 16 sind in den Figuren 4 bis 6 dargestellt. Fig. 4 zeigt einen Verdrängungsabschnitt 17 in Form einer umlaufenden Schneide mit einem Schneidenwinkel, der kleiner ist als 90°. Fig. 5 zeigt eine Ausführung eines Verdrängungsabschnitts 18 mit einer umlaufenden Verdrängungskante mit einem Kantenwinkel von 90°, also mit einem rechtwinkligen Kantenwinkel. Fig. 6 zeigt einen Verdrängungsabschnitt 19 mit einer umlaufenden Verdrängungskante mit einem Kantenwinkel, der größer ist als 90°.

Die Herstellung der Schweißverbindung zwischen den beiden Kunststoffkörpern 2, 3 wird nachfolgend anhand der Figuren 7 bis 9 erläutert: Fig. 7 zeigt einen Roh-Kunststoffkörper 20 mit der äußeren ersten Kunststoffkomponente 4 und der inneren zweiten Kunststoffkomponente 5.

Mit dem Verdrängungsabschnitt 15 wird nun die zunächst mit einer Stirnfläche 21 des Roh-Kunststoffkörpers 20 fluchtende Roh-Grenzfläche 22 der zweiten Kunststoffkomponente 5 um einen Abstand B (vgl. Fig. 8) in den Fig. 7 und 8 nach links, also von der noch zu erstellenden Schweißverbindung weg, verdrängt. Bei der mehrteiligen Ausführung des Werkzeugs dringt bei dieser Verdrängung nicht nur der Verdrängungsabschnitt 15, sondern auch ein führender Bereich des Grundkörpers 14 in die von der ersten Kunststoffkomponente 4 vorgegebene Außenwand des Roh-Kunststoffkörpers 20 ein, da der Abstand B größer ist als die Tiefe des Verdrängungskörpers 15. Im Bereich der so entstehenden Grenzfläche 9 der zweiten Kunststoffkomponente 5 bildet sich durch zurückgedrängtes Material der zweiten Kunststoffkomponente 5 eine Wulstkante 23, die im Bereich der Grenzfläche 9 komplementär zum Verdrängungsabschnitt 16 geformt ist. Aufgrund der zurückgedrängten zweiten Kunststoffkomponente 5 entstehen freie stirnseitige Randbereiche 24 der ersten Kunststoffkomponente 4, deren Überstand über die zweite Kunststoffkomponente 5 dem Abstand B entspricht. Der Randbereich 24 stellt eine oberflächennahe Profilschicht der ersten Kunststoffkomponente 4 dar.

Aufgrund des erwärmten Verdrängungskörpers 15 wird die mit diesem in Kontakt kommende zweite Kunststoffkomponente 5 teilweise aufgeschmolzen, so dass sie sich leicht zurückdrängen lässt. Soweit die zweite Kunststoffkomponente 5 als Kunststoffmatrix Polyurethan aufweist, wird dieses Material in der Schmelze im Vergleich zu PVC niederviskos, was das Zurückdrängen zusätzlich begünstigt. Das Zurückdrängen der zweiten Kunststoffkomponente 5 kann extrusionstechnisch begünstigt werden, indem die Komponente 5 mit Eigenspannung bei der Extrusion, also der Profilfertigung, eingebracht wird.

Anschließend wird das Verdrängungs-Bauteil 11 wieder zurückgezogen und ein zweiter Roh-Kunststoffkörper 20 wird auf die gleiche Weise wie im Zusammenhang mit den Figuren 7 und 8 beschrieben, bearbeitet, so dass auch dort die zurückgedrängte Grenzfläche 9 der zweiten Kunststoffkomponente 5 erzeugt ist. Anschließend werden die beiden so hergestellten Roh-Kunststoffkörper 20 relativ zueinander so orientiert, dass ihre Längsachsen L miteinander fluchten und die Grenzflächen 9 einander zugewandt sind. Zwischen die beiden so orientierten Roh-Kunststoffkörper 20 wird dann der Heizspiegel 12 eingebracht. Dieser wird durch eine entsprechende Temperaturregelung auf eine zweite Vorgabe-Temperatur gebracht. Die beiden Vorgabe-Temperaturen für den Verdrängungskörper 15 einerseits und den Heizspiegel 12 andererseits können gleich sein.

Dies ist jedoch nicht zwingend und abhängig von den Materialeigenschaften der Kunststoffkomponenten 4 und 5.

Mit dem Heizspiegel 12 werden nun die stirnseitigen Randbereiche 24 der ersten Kunststoffkomponente 4 in Kontakt gebracht, so dass diese angeschmolzen werden. Dabei biegen sich die Randbereiche 24 um 90° nach innen, auf die Längsachse L zu, um und füllen den Zwischenraum zwischen dem Heizspiegel 12 und der Grenzfläche 9 der zweiten Kunststoffkomponente 5 aus. Hierdurch ist verhindert, dass der Heizspiegel 12 mit der zweiten Kunststoffkomponente 5 in Kontakt kommt.

Der Heizspiegel 12 wird nun entfernt und die einander zugewandten Randbereiche 24 der ersten Kunststoffkomponente 4 werden, wobei die Längsachsen L der beiden beteiligten Roh-Kunststoffkörper 20 miteinander fluchten, miteinander in der Schweißnaht-Ebene 8 verpresst, so dass sich aus den aneinander nun anliegenden Randbereichen 24 die Wulst 10 ergibt. Nach dem Abkühlen des Schweißbereichs liegt dann das fertig verbundene Kunststoff-Verbundbauteil 1 vor.

Je nach der Materialkombination der ersten Kunststoffkomponente 4 einerseits und der zweiten Kunststoffkomponente 5 andererseits können auch die anderen, in den Figuren 4 bis 6 dargestellten Formen der Verdrängungsabschnitte 17 bis 19 vorteilhaft sein, um eine saubere Verdrängung der zweiten Kunststoffkomponente 5 hin zur Grenzfläche 9 zu bewerkstelligen. Wichtig ist es jeweils, den Randbereich 24 der ersten Kunststoffkomponente 4 möglichst frei von Resten der zweiten Kunststoffkomponente 5 durch den Verdrängungsschritt zu erzeugen, wobei es zusätzlich von Vorteil ist, wenn eine sauber definierte Grenzfläche 9 der zweiten Kunststoffkomponente 5 erzeugt ist, die die sich nach innen während der Erwärmung durch den Heizspiegel 12 umbiegenden Randbereiche 24 abstützt.

Entsprechend können die beiden Roh-Kunststoffkörper 20 auch mit dem einteiligen Werkzeug 13 verarbeitet werden. Hierbei erfolgt zeitgleich mit dem Zurückdrängen der zweiten Kunststoffkomponente 5 bis hin zur Grenzfläche 9 durch die Verdrängungskörper 15, 15' eine Erwärmung der hierdurch entstehenden Randbereiche 24 durch den Heizspiegel 12'. Beim einteiligen Werkzeug 13 kann eine Temperaturregelung derart vorgesehen sein, dass die Verdrängungskörper 15, 15' auf einer anderen Vorgabe-Temperatur gehalten werden als der Heizspiegel 12', so dass durch Wärmeübertragung dann, wenn das Werkzeug 13 mit den Kunststoffkomponenten 4, 5 in Kontakt kommt, die Kunststoffkomponente 4 auf eine andere Temperatur gebracht werden kann als die Kunststoffkomponente 5.

Beim Einsatz des Werkzeugs 13 werden zwei Roh-Kunststoffkörper 20, die einander stirnseitig zugewandt sind und deren Längsachsen L miteinander fluchten, gleichzeitig verarbeitet. Bei der mit dem Werkzeug 13 möglichen gleichzeitigen Erwärmung der Kunststoffkomponenten 4, 5 muss darauf geachtet werden, dass die erste Kunststoffkomponente 4 sich beim Aufschmelzen derart verformt, dass ein Zurückziehen des Werkzeugs 13 aus dem Roh-Kunststoffkörper 20 nach dem Verdrängen der zweiten Kunststoffkomponente 5 möglich bleibt. Bevorzugt werden daher beim einteiligen Werkzeug 13 hinterschneidungsfreie Gestaltungen des Verdrängungsabschnitts, also Gestaltungen wie die Verdrängungsabschnitte 16, 18 und 19, verwendet. Beim einteiligen Werkzeug 13 biegen sich die Randbereiche 24 nicht nach innen um, sondern werden nach außen gebogen oder gestaucht. Beim Verpressen der beiden Roh-Kunststoffkörper 20 nach dem Entfernen des Werkzeugs 13 kann sich dann im Bereich der Schweißnaht 7 eine Schweißwulst, gebildet aus der ersten Kunststoffkomponente 4, ausbilden. Diese Wulst kann eine Verdickung der Kunststoffkomponente 4 nach innen, also auf die Längsachse L zu, eine Verdickung der Kunststoffkomponente 4 nach außen oder aber eine Verdickung der Kunststoffkomponente 4 in beiden Richtungen haben.

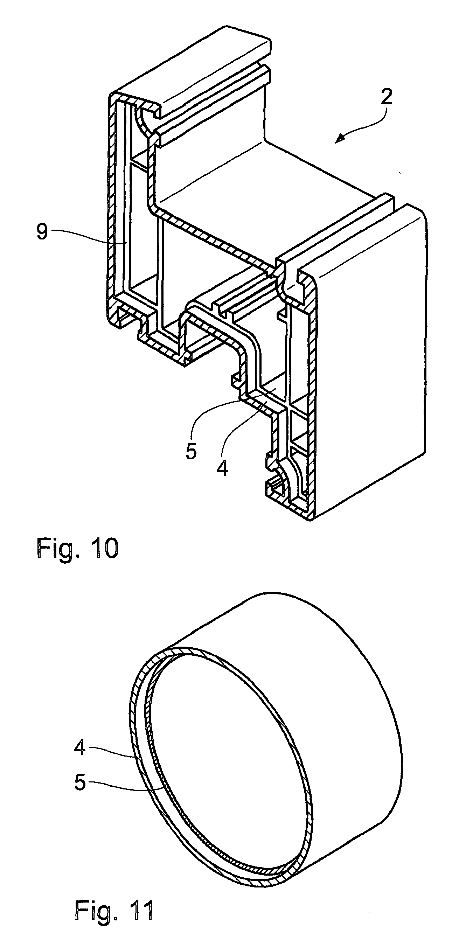

Fig. 10 zeigt eine Variante eines Kunststoffkörpers 2, der mit einem nicht dargestellten weiteren Kunststoffkörper durch Schweißen verbunden werden soll. Dargestellt ist der Kunststoffkörper 2 in einer Momentaufnahme bei der Herstellung der Schweißverbindung, die derjenigen nach Fig. 8 entspricht. Komponenten, die denjenigen entsprechen, die vorstehend schon unter Bezugnahme auf die Figuren 1 bis 9 erläutert wurden, tragen die gleichen Bezugsziffern und werden nicht nochmals im Einzelnen diskutiert.
Das Zurückdrängen der Grenzfläche 4 ist bei der Ausführung nach Fig. 10 schematisch dargestellt. In der Realität ergibt sich durch das Zurückdrängen in der Regel eine wulstförmige Verdickung der zweiten Kunststoffkomponente 5, wie in der Fig. 8 dargestellt.

Der Kunststoffkörper 2 nach Fig. 10 ist ein Fenster- oder Tür-Hohlkammerprofilabschnitt. Die Kunststoffkomponente 4 gibt die äußere Profilkontur des Profilabschnitts vor. Die Kunststoffkomponente 5 gibt ein inneres Hohlkammerprofil im Profilabschnitt vor. Die Kunststoffkomponente 5 wird insgesamt von der Schweißnaht-Ebene 8, die durch die dem Betrachter zugewandte Stirnfläche der ersten Kunststoffkomponente 4 vorgegeben ist, zurückgedrängt. Beim Verschweißen der als Profilabschnitte ausgeführten Kunststoffkörper 2 wird hierbei gewährleistet, dass im Schweißbereich die zweiten Kunststoffkomponenten 5 der beiden Kunststoffkörper 2 (und 3) nicht miteinander in Kontakt kommen.

Fig. 11 zeigt in einer zu Fig. 10 ähnlichen Darstellung eine weitere Variante eines Kunststoffkörpers 2, der als Rohrabschnitt ausgebildet ist. Komponenten, die denjenigen entsprechen, die vorstehend schon unter Bezugnahme auf die Ausführungen nach den Figuren 1 bis 10 erläutert wurden, tragen die gleichen Bezugsziffern und werden nicht nochmals im Einzelnen diskutiert.

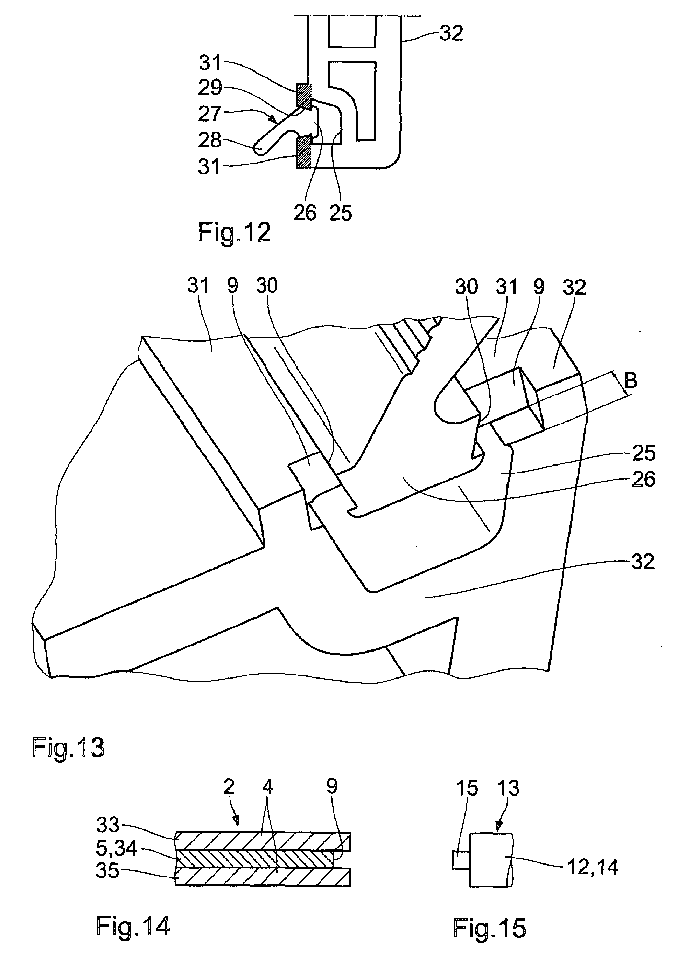

Die Figuren 12 und 13 zeigen einen Ausschnitt des Hohlkammerprofilabschnitts des Beispiels des Kunststoffkörpers 2 nach Fig. 10 im Bereich einer Dichtungsaufnahme 25. Wie insbesondere der vergrößerten perspektivischen Darstellung der Fig. 13 zu entnehmen ist, ist in die Dichtungsaufnahme 25 ein Rastabschnitt 26 einer Dichtung 27 eingerastet, die den Profilabschnitt über eine Dichtlippe 28 gegen eine weitere Komponente abdichtet.

Der Rastabschnitt 26 ist in eine Rastnut 29 der Dichtungsaufnahme 25 eingerastet. Dort, wo einander zugewandte Stegabschnitte 30 die Rastnut 29 seitlich begrenzen, ist eine Kunststoffkomponente 31 des Profilabschnitts um den Abstand B gegenüber einer sonstigen Kunststoffkomponente 32 des Profilabschnitts zurückgedrängt, analog zu dem, was vorstehend unter Bezugnahme auf die Fig. 8 erläutert wurde. Die Kunststoffkomponente 32 entspricht dabei der ersten Kunststoffkomponente 4 und die Kunststoffkomponente 31 entspricht der Kunststoffkomponente 5. Bei der Ausführung nach den Figuren 12 und 13 sind die beiden Kunststoffkomponenten 31, 32 im Unterschied zu den Ausführungen nach den Figuren 1 bis 11 also aus dem gleichen Kunststoffmaterial.

Profilabschnitte nach Art des Kunststoffkörpers 2 der Fig. 10 können mitsamt der Dichtung 27 verschweißt werden, ohne dass unerwünscht Kunststoffmaterial des Profilabschnitts im Bereich der Schweißnaht 7 zwischen den Profilabschnitten zu einer Verhärtung der Dichtung 27 führt. Analog zu dem, was vorstehend unter Bezugnahme auf die Figuren 7 bis 9 beschrieben wurde, kann beim Verschweißen Material der ersten Kunststoffkomponente 32 in den verdrängten Bereich der zweiten Kunststoffkomponente 31 einfließen und kommt dabei nicht sofort in Kontakt mit der Dichtung 27, so dass dieses einfließende Material die Dichtungseigenschaften im Bereich der Schweißnaht 7 nicht negativ beeinflussen kann. Beim Verschweißen werden auch die im Schweißbereich einander zugewandten Abschnitte der Dichtung 27 miteinander verschweißt.

Da die erste Kunststoffkomponente 32 in das durch die verdrängte Kunststoffkomponente 31 frei werdende Volumen einfließen kann, bleibt die Dichtung 27 auch im Schweißbereich zwischen den miteinander verschweißten Profilabschnitten weich und elastisch und kann somit ihre Dichtfunktion ausüben.

Fig. 14 zeigt einen Abschnitt einer weiteren Variante eines Kunststoffkörpers 2, der aus drei Kunststoff-Verbundlagen 33, 34, 35 aufgebaut ist. Die Kunststoffkomponente 34 entspricht dabei der Kunststoffkomponente 5 der Ausführung nach den Figuren 1 bis 11. Die beiden die Kunststoff-Verbundlage 34 umgebenden Kunststoff-Verbundlagen 33, 35 entsprechen der Kunststoffkomponente 4 der Ausführung nach den Figuren 1 bis 11. Die Kunststoff-Verbundlagen 33, 35 sind aus gut schweißbarem und die Kunststoff-Verbundlage 34 ist aus weniger gut schweißbarem Material.

Fig. 15 zeigt ein Werkzeug zur Herstellung einer Schweißverbindung zwischen zwei Kunststoffkörpern nach Art des in der Fig. 14 dargestellten Kunststoffkörpers. Komponenten der Ausführung nach den Figuren 14 und 15, die denjenigen entsprechen, die vorstehend schon unter Bezugnahme auf die Figuren 1 bis 11 beschrieben wurden, tragen die gleichen Bezugsziffern und werden nicht nochmals im Einzelnen erläutert.

Ein Verdrängungskörper 15 eines Werkzeugs 13 nach Fig. 15 zur Herstellung der Schweißverbindung zwischen den Profilabschnitten nach Fig. 2 hat eine zu den verdrängten Abschnitten der zweiten Kunststoffkomponente 31 komplementäre Form.

Der Verdrängungsabschnitt 15 des Werkzeugs 13 nach Fig. 15 ist komplementär zum zu verdrängenden Abschnitt der inneren Kunststoff-Verbundlage 34 ausgeführt, so dass der Verdrängungskörper 15 die innere Kunststoff-Verbundlage 34 bis hin zur Grenzfläche 9 zurückdrängen kann. Der Grundkörper 14 des Werkzeugs 13 nach Fig. 15 stellt gleichzeitig den Heizspiegel 12 dar.

## Patentansprüche

1. Kunststoff-Verbundbauteil (1)
- mit zwei miteinander verschweißten Kunststoffkörpern (2, 3) mit einer ersten, äußeren Kunststoffkomponente (4; 32; 33, 35) und einer zweiten, inneren Kunststoffkomponente (5; 31; 34),
**dadurch gekennzeichnet, dass**
die Kunststoffkörper (2, 3) als Fenster- oder Tür-Hohlkammerprofilabschnitte ausgebildet sind und
benachbart zu einer Schweißnaht (7) zwischen den beiden Kunststoffkörpern (2, 3) die zweite Kunststoffkomponente (5; 31) von der Schweißnaht (7) weg verdrängt vorliegt, so dass eine der Schweißnaht (7) zugewandte Grenzfläche (9) der zweiten, inneren Kunststoffkomponente (5; 31) von einer Schweißnaht-Ebene (8) beabstandet (A) ist.

2. Kunststoff-Verbundbauteil nach Anspruch 1, **dadurch gekennzeichnet, dass** die Kunststoffkörper (2, 3) aus jeweils einem Kunststoff-Verbundmaterial mit der ersten Kunststoffkomponente (4) und der zweiten Kunststoffkomponente (5) gebildet ist, wobei die beiden Kunststoffkomponenten (4, 5) aus unterschiedlichen Materialien gefertigt sind.

3. Kunststoff-Verbundmaterial nach Anspruch 1 oder 2, **dadurch gekennzeichnet, dass** die zweite Kunststoffkomponente (5; 31) mindestens einen Füllstoff aufweist.

4. Kunststoff-Verbundbauteil nach Anspruch 3, **dadurch gekennzeichnet, dass** die Kunststoffkörper (2) aus mindestens drei Kunststoff-Verbundlagen (33 bis 35) aufgebaut sind, wobei die insbesondere den Füllstoff aufweisende zweite Kunststoffkomponente (5, 34) zwischen zwei Lagen (33, 35) der ersten Kunststoffkomponente (4) angeordnet ist.

5. Werkzeug (11, 12; 13) zur Herstellung einer Schweißverbindung zwischen zwei Kunststoffkörpern (2, 3) nach einem der Ansprüche 1 bis 4
- mit einem Schweißspiegel (12; 12') zum definierten Aufschmelzen einer oberflächennahen, der Schweißnaht-Ebene (8) benachbarten Schicht (24) der ersten Kunststoffkomponente (4; 31),
- mit einem Verdrängungskörper (15) zum Verdrängen der zweiten Kunststoffkomponente (5; 31; 34) aus der Schweißnaht-Ebene (8),
**dadurch gekennzeichnet, dass** der Verdrängungskörper (15) als mit dem Schweißspiegel (12') verbundener Überstandskörper ausgebildet ist.

6. Werkzeug nach Anspruch 5, **dadurch gekennzeichnet, dass** ein Verdrängungsabschnitt (16) des Verdrängungskörpers (15) mit einem ballig umlaufenden Rand ausgebildet ist.

7. Werkzeug nach Anspruch 5, **dadurch gekennzeichnet, dass** ein Verdrängungsabschnitt (17) des Verdrängungskörpers (15) derart ausgebildet ist, dass er beim Verdrängen der zweiten Kunststoffkomponente (5; 31) mit dieser über eine Verdrängungskante bzw. -schneide in Kontakt kommt, die einen Kantenwinkel hat, der geringer ist als 90°.

8. Werkzeug nach Anspruch 5, **dadurch gekennzeichnet, dass** ein Verdrängungsabschnitt (17) des Verdrängungskörpers (15) derart ausgebildet ist, dass er beim Verdrängen der zweiten Kunststoffkomponente (5; 31) mit dieser über eine Verdrängungskante in Kontakt kommt, die einen Kantenwinkel hat, der genau 90° beträgt.

9. Werkzeug nach Anspruch 5, **dadurch gekennzeichnet, dass** ein Verdrängungsabschnitt (17) des Verdrängungskörpers (15) derart ausgebildet ist, dass er beim Verdrängen der zweiten Kunststoffkomponente (5; 31) mit dieser über eine Verdrängungskante in Kontakt kommt, die einen Kantenwinkel hat, der größer ist als 90°.

10. Werkzeug nach einem der Ansprüche 5 bis 9, **dadurch gekennzeichnet, dass** der Verdrängungskörper (15) so ausgebildet ist, dass er beim Betrieb des Werkzeugs (11, 12; 13) dem Kunststoffkörper (2, 3) zugewandt eine andere Oberflächentemperatur aufweist als der Schweißspiegel (12; 12').

11. Verfahren zur Herstellung einer Schweißverbindung zwischen zwei Kunststoffkörpern (2, 3) nach einem der Ansprüche 1 bis 5 mit folgenden Schritten:
- Bereitstellen zweier Roh-Kunststoffkörper (20) mit den beiden Kunststoffkomponenten (4, 5; 32, 31; 33 bis 35),
- Verdrängen der zweiten Kunststoffkomponente (5; 31; 34) benachbart zu einer Schweißnaht (7) zwischen den beiden Kunststoffkörpern (2, 3) von der Schweißnaht (7) weg, so dass eine der Schweißnaht (7) zugewandte Grenzfläche (9) der zweiten Kunststoffkomponente (5; 31; 34) von einer Schweißnaht-Ebene (8) beabstandet ist,
- Verschweißen der beiden Kunststoffkörper (2, 3).

## Claims

1. Plastic composite component (1)
- comprising two plastic bodies (2, 3) welded together, comprising a first, outer plastic component (4; 32; 33, 35) and a second, inner plastic component (5; 31; 34),
**characterized in that**,
the plastic bodies (2, 3) are formed as window or door hollow-chamber profile sections and
next to a weld seam (7) between the two plastic bodies (2, 3), the second plastic component (5; 31) is in a state of being displaced away from the weld seam (7), so that a boundary surface (9), facing the weld seam (7), of the second, inner plastic component (5; 31) is kept at a distance (A) from a weld seam plane (8).

2. Plastic composite component according to Claim 1, **characterized in that** the plastic bodies (2, 3) are formed in each case from a plastic composite material comprising the first plastic component (4) and the second plastic component (5), the two plastic components (4, 5) being produced from different materials.

3. Plastic composite material according to Claim 1 or 2, **characterized in that** the second plastic component (5; 31) comprises at least one filler.

4. Plastic composite component according to Claim 3, **characterized in that** the plastic bodies (2) are made up of at least three plastic composite layers (33 to 35), the second plastic component (5, 34), particularly comprising the filler, being arranged between two layers (33, 35) of the first plastic component (4).

5. Tool (11, 12; 13) for producing a weld connection between two plastic bodies (2, 3) according to one of Claims 1 to 4
- comprising a welding mirror (12; 12') for the defined melting of a near-surface layer (24) of the first plastic component (4; 31) that is next to the weld seam plane (8),
- comprising a displacer (15) for displacing the second plastic component (5; 31; 34) from the weld seam plane (8),
**characterized in that** the displacer (15) is formed as a projection connected to the welding mirror (12').

6. Tool according to Claim 5, **characterized in that** a displacing section (16) of the displacer (15) is formed with a crowned peripheral border.

7. Tool according to Claim 5, **characterized in that** a displacing section (17) of the displacer (15) is formed in such a way that during the displacement of the second plastic component (5; 31) it comes into contact with the latter by way of a displacing edge or blade which has an edge angle that is less than 90°.

8. Tool according to Claim 5, **characterized in that** a displacing section (17) of the displacer (15) is formed in such a way that during the displacement of the second plastic component (5; 31) it comes into contact with the latter by way of a displacing edge which has an edge angle that is precisely 90°.

9. Tool according to Claim 5, **characterized in that** a displacing section (17) of the displacer (15) is formed in such a way that during the displacement of the second plastic component (5; 31) it comes into contact with the latter by way of a displacing edge which has an edge angle that is greater than 90°.

10. Tool according to one of Claims 5 to 9, **characterized in that** the displacer (15) is formed such that during operation of the tool (11, 12; 13) it has facing the plastic body (2, 3) a different surface temperature than the welding mirror (12; 12').

11. Method for producing a weld connection between two plastic bodies (2, 3) according to one of Claims 1 to 5 with the following steps:
- providing two blank plastic bodies (20) comprising the two plastic components (4, 5; 32, 31; 33 to 35),
- next to a weld seam (7) between the two plastic bodies (2, 3), displacing the second plastic component (5; 31; 34) away from the weld seam (7), so that a boundary surface (9), facing the weld seam (7), of the second plastic component (5; 31; 34) is kept at a distance from a weld seam plane (8),
- welding the two plastic bodies (2, 3).

## Revendications

1. Composant composite plastique (1)
- comportant deux corps plastiques (2, 3) soudés l'un à l'autre, comprenant un premier composant plastique extérieur (4 ; 32 ; 33, 35) et un deuxième composant plastique intérieur (5 ; 31 ; 34),
**caractérisé en ce que**
les corps plastiques (2, 3) sont conçus comme des segments de profilés creux pour fenêtres ou portes, et
au voisinage d'un cordon de soudure (7) entre les deux corps plastiques (2, 3), le deuxième composant plastique (5 ; 31) est présent éloigné du cordon de soudure (7), de sorte qu'une surface limite (9), dirigée vers le cordon de soudure (7), du deuxième composant plastique intérieur (5 ; 31) se trouve à une certaine distance (A) d'un plan (8) du cordon de soudure.

2. Composant composite plastique selon la revendication 1, **caractérisé en ce que** chacun des corps plastiques (2, 3) est formé d'un matériau composite plastique comprenant le premier composant plastique (4) et le deuxième composant plastique (5), les deux composants plastiques (4, 5) étant fabriqués en des matériaux différents.

3. Matériau composite plastique selon la revendication 1 ou 2, **caractérisé en ce que** le deuxième composant plastique (5 ; 31) comprend au moins une charge.

4. Composant composite plastique selon la revendication 3, **caractérisé en ce que** les corps plastiques (2) sont constitués d'au moins trois couches composites plastiques (33 à 35), le deuxième composant plastique (5, 34), comprenant en particulier la charge, étant disposé entre deux couches (33, 35) du premier composant plastique (4).

5. Outil (11, 12 ; 13) pour la fabrication d'un assemblage soudé entre deux corps plastiques (2, 3) selon l'une des revendications 1 à 4,
- comportant un miroir de soudure (12 ; 12'), pour une fusion définie de la couche (24), proche de la surface, voisine du plan (8) du cordon de soudure, du premier composant plastique (4 ; 31),
- comprenant un corps de déplacement (15), pour déplacer le deuxième composant plastique (5 ; 31 ; 34) à partir du plan (8) du cordon de soudure,
**caractérisé en ce que** le corps de déplacement (15) est conçu comme un corps en saillie, relié au miroir de soudure (12').

6. Outil selon la revendication 5, **caractérisé en ce qu'**un segment de déplacement (16) du corps de déplacement (15) est réalisé avec un bord périphérique bombé.

7. Outil selon la revendication 5, **caractérisé en ce qu'**un segment de déplacement (17) du corps de déplacement (15) est conçu de telle sorte que, lors du déplacement du deuxième composant plastique (5 ; 31), il entre en contact avec ce dernier par l'intermédiaire d'une arête ou d'un taillant de déplacement qui a un angle d'arête inférieur à 90°.

8. Outil selon la revendication 5, **caractérisé en ce qu'**un segment de déplacement (17) du corps de déplacement (15) est conçu de telle sorte que, lors du déplacement du deuxième composant plastique (5 ; 31), il entre en contact avec ce dernier par l'intermédiaire d'une arête de déplacement qui présente un angle d'arête d'exactement 90°.

9. Outil selon la revendication 5, **caractérisé en ce qu'**un segment de déplacement (17) du corps de déplacement (15) est conçu de telle sorte que, lors du déplacement du deuxième composant plastique (5 ; 31), il entre en contact avec ce dernier par l'intermédiaire d'une arête de déplacement qui a un angle d'arête supérieur à 90°.

10. Outil selon l'une des revendications 5 à 9, **caractérisé en ce que** le corps de déplacement (15) est conçu de telle sorte que, lors de l'utilisation de l'outil (11, 12 ; 13), il soit dirigé vers le corps plastique (2, 3) et présente une température de surface différente de celle du miroir de soudure (12 ; 12').

11. Procédé de fabrication d'un assemblage soudé entre deux corps plastiques (2, 3) selon l'une des revendications 1 à 5, comportant les étapes suivantes :
- fourniture de deux corps plastiques bruts (20), comprenant les deux composants plastiques (4, 5 ; 32, 31 ; 33 à 35),
- déplacement du deuxième composant plastique (5 ; 31 ; 34), au voisinage d'un cordon de soudure (7) entre les deux corps plastiques (2, 3), à partir du cordon de soudure (7), de façon qu'une surface limite (9), dirigée vers le cordon de soudure (7), du deuxième composant plastique (5 ; 31 ; 34), se trouve à une certaine distance du plan (8) du cordon de soudure,
- soudure des deux corps plastiques (2, 3).
